# FASCICULE DE BREVET EUROPEEN

(11) **EP 1 750 190 B1**
(45) Date de publication et mention de la délivrance du brevet: **29.07.2009**
(21) Numéro de dépôt: 06291254.8
(22) Date de dépôt: 02.08.2006
(51) Int. Cl.: G05B 19/4099, B29C 33/38, B29C 33/30

(54) **Procédé de modification localisée d'un dispositif de moulage stratifié et insert de modification localisée dans une strate**
Verfahren zur lokalisierten Modifikation in einer Vorrichtung für Formpresslinge und Einsatzteil zur lokalisierten Modifikation in einem Laminat
Localised modification process for a stratified casting device and modification insert located in a stratum

(30) Priorité: 02.08.2005 FR 0508251
(43) Date de publication de la demande: 07.02.2007
(73) Titulaire: Etablissements Catoire Semi, 36220 Martizay (FR); CIRTES SRC, 88100 Saint Die des Vosges (FR)
(72) Inventeur: Cunin, Denis, 88600 Bruyeres (FR); Desbordes, Gilles, 36220 Martizay (FR); Barlier, Claude, 88100 Coinches (FR); Catoire, Dominique, 86270 La Roche Posay (FR)
(74) Mandataire: Debay, Yves

(56) Documents cités:
- EP-A- 0 585 502
- WO-A-95/08416
- FR-A- 2 699 853

## Description

La présente invention concerne le domaine des moules industriels par strates destinés à la transformation des matériaux, par exemple plasturgie ou soufflage ou injection d'alliages légers notamment aluminium,. L'invention est utilisée notamment pour le moulage de pièces complexes selon la technique de « modèles perdus" (procédé lost-foam). L'invention concerne plus particulièrement un procédé de modification localisée d'un dispositif de moulage stratifié et un insert de modification localisée dans une strate. L'invention peut aussi s'appliquer au moulage des bouteilles plastiques, au procédé de moulage par soufflage ou encore au procédé de moulage nécessitant un passage d'eau (pour le refroidissement) ou d'huile (pour la thermo régulation) dans les moules.

De manière connue pour la mise en oeuvre du procédé PMP (procédé de modèle perdu), le moulage de pièces complexes est permis à l'aide d'un moule conçu par stratoconception. Les portions d'outillage formant les strates sont assemblées pour former un moule. Une méthode de fabrication d'un tel moule, appelée « Stratoconception » (marque déposée), a été développée et brevetée par le centre de recherche CIRTES. Le procédé de conception par strates a été notamment décrit pour plusieurs applications, dans les demandes de brevet FR 2 834 803, FR2 789 187 et FR 2 789 188 ou encore dans le brevet européen EP 0 585 502. Ce procédé de fabrication prévoit la réalisation d'une pièce mécanique à partir d'une conception assistée par ordinateur comportant les phases de :
- décomposition préalable de la partie massive de la pièce en strates élémentaires ;
- fabrication des strates élémentaires à partir d'une mise en panoplie ;
- reconstitution de la pièce dans son intégralité par superposition et assemblage des strates.

Il est également connu, par la demande WO 2004/034165 déposée par le centre CIRTES, un procédé de conception par strates qui permet de décomposer des strates en plusieurs parties à des fins de modélisation de façon à optimiser le dimensionnement de la pièce à fabriquer avant sa réalisation.

Le procédé de conception par strates peut s'appliquer non seulement à la réalisation de pièces moteur automobiles par PMP, mais également à d'autres pièces en plasturgie (bouteilles d'eau, etc..). Dans les applications PMP, le passage de vapeur pour expanser la matière plastique, notamment dans le cas du polystyrène, est possible grâce à des passages créés spécifiquement entre chaque strate (il n'y pas d'étanchéité entre deux strates adjacente de l'empilement). Des mises au point de prototypes peuvent avantageusement être réalisées par le procédé de stratoconception.

Bien que le procédé de conception par strates procure déjà un certain nombre d'avantages, un inconvénient des méthodes actuelles est qu'il n'est pas possible de faire évoluer facilement la forme du moule. En effet, une fois le moule constitué par l'empilage des strates, la moindre modification dans la pièce à fabriquer nécessite le remplacement complet d'une ou plusieurs strates.

Il est connu, par exemple par le document FR 2 699 853, de diviser des tranches de moule en deux parties pour former un moule en deux parties, adapté à la conception de pneumatiques. Les tranches peuvent être très fines et permettre ainsi une découpe de précision. Cependant, si la modification du moule ne peut pas être effectuée par un simple retrait de matière, via une découpe supplémentaire des tranches, il reste nécessaire de fabriquer un nouveau jeu de tranches de remplacement.

La présente invention a donc pour objet de supprimer un ou plusieurs des inconvénients de l'art antérieur en définissant un procédé de modification d'un dispositif de moulage stratifié, permettant de faire évoluer la forme d'un moule obtenu par un procédé de conception par strates.

Un autre objet de la présente invention est également de faciliter la phase de mise au point de prototypes réalisés par empilement de strates, par exemple par le procédé de stratoconception.

A cet effet, l'invention propose un procédé de modification localisée d'un dispositif stratifié de moulage d'une matière, comprenant une étape de fourniture d'une pluralité de strates conçues chacune d'après un modèle numérique de conception assistée par ordinateur pour former par empilement des strates un premier dispositif de moulage, le procédé étant caractérisé en ce qu'il comprend :
- une étape de sélection d'au moins une strate à modifier à partir d'un fichier CAO à jour ; (cette identification et sélection se fait par comparaison entre le fichier "avant modification" et le fichier "modifié") ;
- à partir d'un fichier contenant le modèle numérique de la strate sélectionnée, une étape de décomposition de la strate sélectionnée en une portion principale et une portion secondaire, la portion secondaire comprenant une partie dite intérieure entourée par la portion principale et une partie dite extérieure correspondant à une zone destinée au contact avec la matière à refroidir ;
- une étape de simulation d'un insert de substitution à la portion secondaire, ayant au moins une partie extérieure modifiée par rapport à la partie extérieure de la portion initiale
- une étape de découpe utilisant au moins un organe de découpe pour enlever, dans la strate sélectionnée, la portion secondaire et former un emplacement de réception d'un insert ;
- une étape de fabrication d'un insert conforme à l'insert résultant de l'étape de simulation, utilisant au moins un organe de découpe pour fabriquer l'insert à partir d'une pièce générique de même épaisseur que la strate sélectionnée ; et
- une étape d'implantation de l'insert fabriqué dans l'emplacement formé lors de l'étape de découpe dans la strate sélectionnée.

Ainsi, le procédé selon l'invention permet de faire évoluer facilement et à moindre coût la forme des strates, en utilisant des strates modifiées par assemblage avec un insert amovible. Les modifications ne portent alors que sur une ou quelques strates identifiées comme devant subir des modifications (dans une partie de la forme moulante).

Selon une autre particularité, l'étape de découpe dans la strate sélectionnée et l'étape de fabrication de l'insert comprennent chacune une découpe par un fil métallique d'électro-érosion ou un mode de découpe choisi parmi les techniques de fraisage, érosion par enfonçage, découpe jet d'eau, découpe laser.

Selon une autre particularité, l'étape d'implantation comprend uniquement une insertion et un serrage de l'insert fabriqué entre au moins deux parois opposées de l'emplacement de réception.

Ainsi, l'assemblage pour former une strate de forme nouvelle est rapide, l'insert étant implanté sans l'aide d'outils ou de moyens de fixation spécifiques.

Selon une autre particularité, l'invention est telle que définie dans les revendication 4 à 6.

Selon une autre particularité, l'étape de décomposition comprend une délimitation d'une portion secondaire séparant la portion principale en deux morceaux distincts, la portion secondaire comprenant une partie intérieure entourée par les deux morceaux de la portion principale et une partie extérieure correspondant à une zone destinée au contact avec la matière à refroidir.

Ainsi, il est permis de changer une partie intermédiaire d'une strate sur une longueur importante, tout en conservant les parties d'extrémité de la strate.

Un autre objet de l'invention est de proposer des strates évolutives pour permettre de conserver la majeure partie du dispositif de moulage stratifié malgré des évolutions de forme dans les pièces à fabriquer par moulage.

A cet effet, l'invention concerne une strate pour dispositif de moulage de type stratifié, caractérisée en ce qu'elle se compose d'au moins une pièce principale et d'un insert amovible prévu pour permettre de faire évoluer localement la forme du dispositif de moulage, la pièce principale étant d'épaisseur déterminée et dotée d'un emplacement de réception délimitant un logement aplati ayant un plan médian confondu avec le plan médian de la strate pour recevoir une partie dite intérieure de l'insert, la partie intérieure, étant d'épaisseur égale à ladite épaisseur déterminée, pouvant comporter des queues d'arondes de liaison avec les formes complémentaires de la pièce principale, et prolongée par une partie dite extérieure incluant une zone destinée au contact avec une matière à refroidir.

Selon une autre particularité, l'emplacement de réception a un profil général en U doté de logements d'ancrage pour recevoir des éléments mâles prévus dans la partie intérieure de l'insert.

Un autre objet de l'invention est de proposer un insert permettant de faire évoluer de façon efficace et économe certaines parties d'un dispositif de moulage stratifié utilisé notamment pour des procédés de type PMP ou de moulage de pièces plastique ou aluminium.

A cet effet, l'invention concerne un insert d'une strate évolutive selon l'invention, destiné à faire évoluer localement la forme d'un dispositif stratifié de moulage, caractérisé en ce qu'il comporte une partie dite intérieure d'épaisseur déterminée prévue pour prendre appui sur un emplacement de réception situé dans une strate du dispositif de moulage et une partie dite extérieure incluant une zone destinée au contact avec une matière à refroidir, ladite partie intérieure comprenant des bords d'accrochage pour se fixer de manière amovible dans un emplacement d'une strate.

Selon une autre particularité, l'insert comporte au moins une forme en queue d'aronde ou toute autre forme géométrique coopérant avec une forme complémentaire réalisée dans la strate.

Un autre objet de l'invention est de proposer un dispositif de moulage conçu par strates qui soit évolutif.

A cet effet, l'invention concerne un dispositif de moulage de type stratifié, formé par empilement d'une pluralité de strates aplaties selon un plan orthogonal à la direction d'empilement, caractérisé en ce qu'il comporte au moins une strate avec insert selon l'invention.

L'invention propose également une application pour la mise au point et l'évolution de prototypes réalisés par un procédé de fabrication par strates tel que le procédé de stratoconception.

A cet effet, l'invention concerne une utilisation d'une strate selon l'invention pour apporter une modification à un prototype réalisé par un procédé de conception par strates.

D'autres particularités et avantages de la présente invention apparaîtront plus clairement à la lecture de la description ci-après faite en référence aux dessins annexés dans lesquels :
- la figure 1 représente un logigramme des étapes du procédé selon un mode de réalisation de l'invention;
- les figures 2A et 2B représentent en perspective des vues respectives du côté moulant d'un dispositif de moulage complet et du côté moulant d'une partie de ce dispositif de moulage ;
- les figures 3a et 3B représente respectivement une zone du côté moulant avant modification et après modification selon le procédé de l'invention ;
- la figure 4 représente une vue en perspective d'une strate d'un dispositif de moulage ;
- la figure 5 représente une vue de côté de la strate de la figure 4 après formation d'un emplacement de réception d'un insert dans la zone à modifier ;
- la figure 6 montre le détail de la zone A des figures 4 et 5, dans laquelle une modification de forme doit être apportée ;
- la figure 7 montre le détail de la zone A des figures 4 et 5 après implantation d'un insert selon l'invention;
- la figure 8 représente une vue en perspective d'une strate dotée d'un insert servant à modifier de façon importante, côté moulant, la forme de la strate de la figure 4 ;
- la figure 9A représente en vue en perspective d'un ensemble de strates, prêtes à être empilées, dont l'une comporte un emplacement de réception d'un insert selon l'invention, et la figure 9B illustre le détail B de la figure 9A.

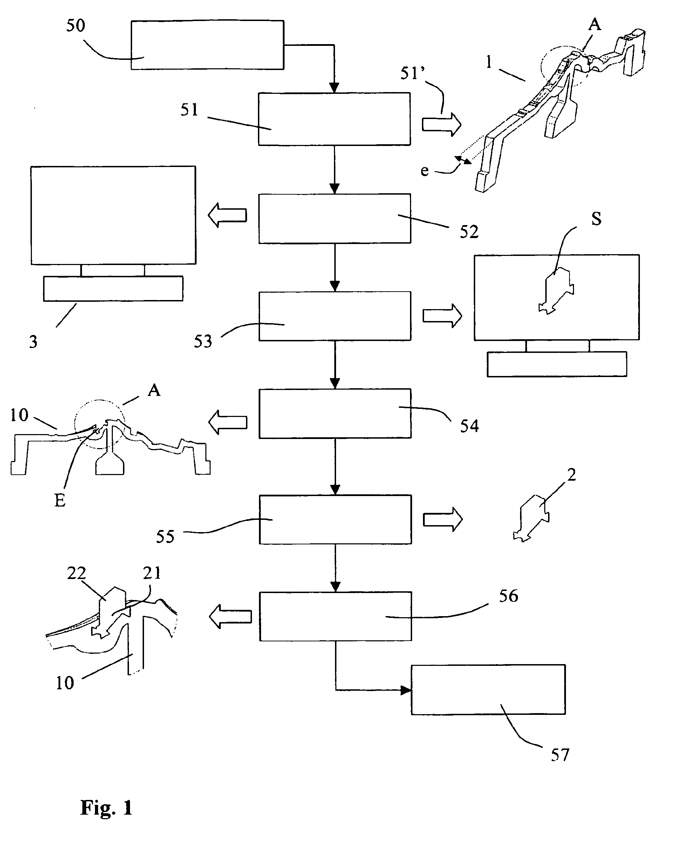

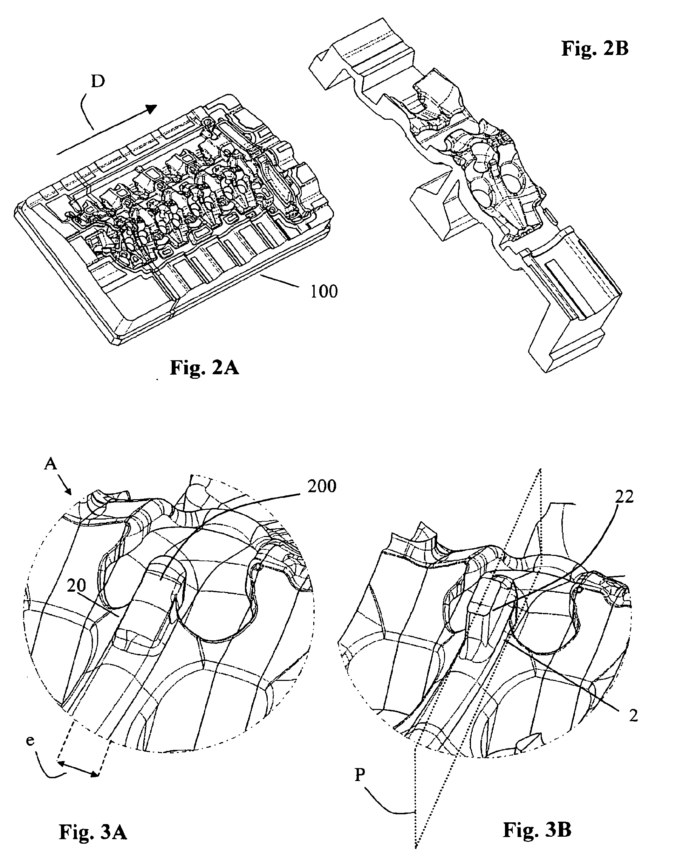

L'invention va maintenant être décrite en liaison avec les figures 1, 2A et 2B.

L'invention s'applique notamment à la fabrication d'un outillage de moulage suivant une conception par strates (prévu par exemple pour le moulage PMP ou le moulage de pièces plastiques ou aluminium). Le dispositif (100) de moulage illustré à la figure 2A est ainsi composé d'un empilage de strates, d'environ 50 strates par exemple, qui, serrées les unes contre les autres, forment un ensemble compact. Chaque strate est de forme aplatie ou de tout autre forme permettant un empilement, par exemple conique, selon un plan orthogonal à la direction (D) d'empilement (de stratification). L'épaisseur (e) des strates (1) est déterminée par calcul lors de la fabrication initiale et peut être, de manière non limitative, de quelques millimètres pour chacune des strates.

L'architecture du dispositif (100) de moulage permet de faire passer de la vapeur entre chaque strate (1), la vapeur servant à expanser des billes de polystyrène introduites dans le moule lors de l'injection. D'autres matières thermoplastiques peuvent être chauffées et refroidies dans le dispositif stratifié de moulage pour former des pièces complexes. En référence à la figure 1, le procédé selon l'invention propose une technique de modification d'une ou plusieurs strates (1) par utilisation de morceaux rapportés appelés inserts (2).

De manière connue, plusieurs strates sont conçues chacune d'après un modèle numérique de conception assistée par ordinateur (3) pour permettre de former le dispositif (100) de moulage, lors d'une étape préalable (50). Un premier dispositif de moulage est donc formé par empilement des strates. Afin d'élaborer un second dispositif de moulage de type analogue au premier dispositif de moulage, il est prévu une étape (51') d'identification d'au moins une zone (A) de moulage à modifier. Comme un modèle numérique du second dispositif de moulage permet de récupérer les modifications virtuelles qu'il faut apporter par apport au modèle correspondant au premier dispositif de moulage, il est possible de définir l'étendue de la zone (A) à modifier. A réception des fichiers de modification, il faut en effet identifier la zone concernée par les modifications et en définir l'étendue, c'est-à-dire le nombre de strates touchées.

L'étape (51') d'identification de la zone (A) de moulage à modifier permet donc de choisir un bloc d'une ou plusieurs strates (adjacentes) dont la forme doit être adaptée. L'étape (51) de sélection de strates à modifier prend ainsi en compte le résultat de l'étape (51') d'identification et permet la réutilisation de toutes les strates du premier dispositif de moulage qui n'ont pas été sélectionnées. Cette identification et sélection se fait par exemple par comparaison entre le fichier "avant modification" et le fichier "modifié".

Dans un mode de réalisation de l'invention, un opérateur utilise un fichier contenant le modèle numérique d'une strate (1) sélectionnée pour réaliser, par l'intermédiaire d'un module logiciel de conception assistée par ordinateur (3), une étape (52) de décomposition virtuelle de la strate (1) sélectionnée en au moins une portion principale (10) et une portion secondaire (20). La portion secondaire (20) comprend une partie dite intérieure (21) entourée par la portion principale (10) et une partie dite extérieure (200) correspondant à une zone du côté moulant de la strate (1).

En référence aux figures 3A et 3 B, la partie extérieure (200), destinée au contact avec la matière à refroidir, doit être remplacée par une partie extérieure (22) de forme différente, conforme aux évolutions de forme indiquées dans les fichiers de modification. L'étape (52) de décomposition de chaque strate (1) sélectionnée utilise des informations représentatives d'une localisation de la zone (A) de moulage à modifier pour générer une portion secondaire (20) correspondant à tout ou partie de la zone (A) à modifier. Lorsque plusieurs strates adjacentes sont à modifier au sein d'une même zone (A), l'étape de décomposition coordonne la génération de chaque portion secondaire (20) pour former un ensemble de portions secondaires (20) qui englobe la zone (A) à modifier.

Ensuite, l'opérateur peut simuler l'implantation d'inserts (S) rapportés dans les strates comme substituant aux portions secondaires (20). Ces inserts (S) couvrent toute la zone (A) à modifier. En référence à la figure 1, l'étape (53) de simulation prévoit le calcul de la forme de chaque insert (S) de substitution à la portion secondaire (20). Il est alors possible de fabriquer un insert (2) amovible à partir de cet insert (S) virtuel doté d'au moins une partie extérieure modifiée par rapport à la partie extérieure (200) de la portion secondaire (20).

Dans le mode de réalisation de la figure 1, au moins un organe de découpe est utilisé lors d'une étape (54) de découpe pour enlever la portion secondaire (20) dans la strate (1) sélectionnée et former un emplacement (E) de réception de l'insert (2) correspondant à l'insert (S) simulé. La portion secondaire (20) est détachée au niveau des contours de la partie intérieure (21). L'étape (55) de fabrication de cet insert (2) conforme à l'insert (S) virtuel utilise également un ou plusieurs organes de découpe. L'insert (2) peut être obtenu à partir d'une pièce générique de même épaisseur (e) que la strate (1) sélectionnée. Un fil métallique d'électroérosion ou un autre organe équivalent de découpe de précision peut être utilisé lors de la fabrication de l'insert (2) et/ou lors de la découpe de l'emplacement (E). En variante, un autre mode de découpe choisi parmi les techniques de fraisage, érosion par enfonçage, découpe jet d'eau ou découpe laser peut être utilisé.

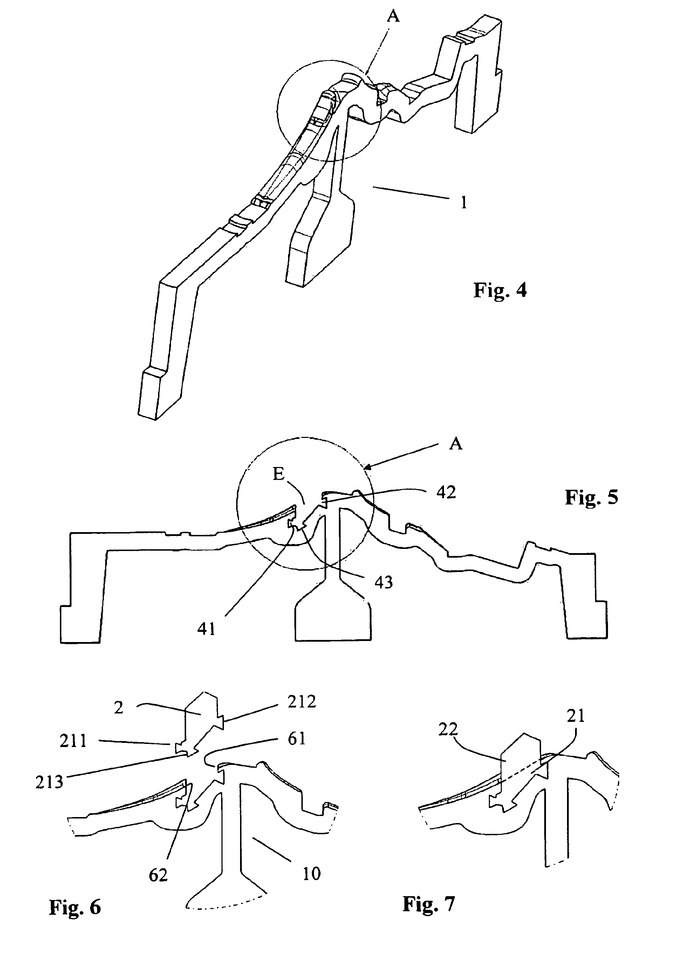

En référence aux figures 1, 6, 7 et 8, l'étape (56) d'implantation de l'insert (2) est effectuée sans outils, par exemple par glissement latéral de l'insert (2) dans l'emplacement (E), selon une direction (D') parallèle à la direction d'empilement (D). Les inserts (2) peuvent être maintenus par emboîtement mâle/femelle, à l'aide d'un ou plusieurs tenons ayant une forme géométrique quelconque. L'emplacement (E) de réception comprend un profil général concave incluant au moins une concavité supplémentaire dans ce profil général. Comme illustré aux figures 5 et 6, des bords d'ancrage (211, 212, 213) sont disposés dans la partie intérieure (21) de l'insert pour permettre la retenue de ce dernier dans des logements d'ancrage (41, 42, 43) complémentaires formés dans l'emplacement (E) de réception. Les bords et logements d'ancrage sont conçus lors de l'étape (52) de décomposition de strate. Un calcul d'une délimitation entre la portion principale (10) et la portion secondaire (20), effectué lors de cette décomposition, prévoit la création de bords d'ancrage (211, 212, 213) dans ladite partie intérieure (21) de la portion secondaire (20), ces bords d'ancrage étant alors complémentaires de logements d'ancrage (41, 42, 43) de l'emplacement (E) de réception.

En référence aux figures 6 à 8, on comprend que l'étape d'implantation (56) se fait uniquement par une insertion et un serrage de l'insert (2) entre au moins deux parois opposées (61, 62) de l'emplacement (E) de réception. L'assemblage des deux parties se faisant avec un jeu extrêmement réduit, il n'y a aucune fixation à prévoir (les strates étant montées serrées les unes contre les autres).

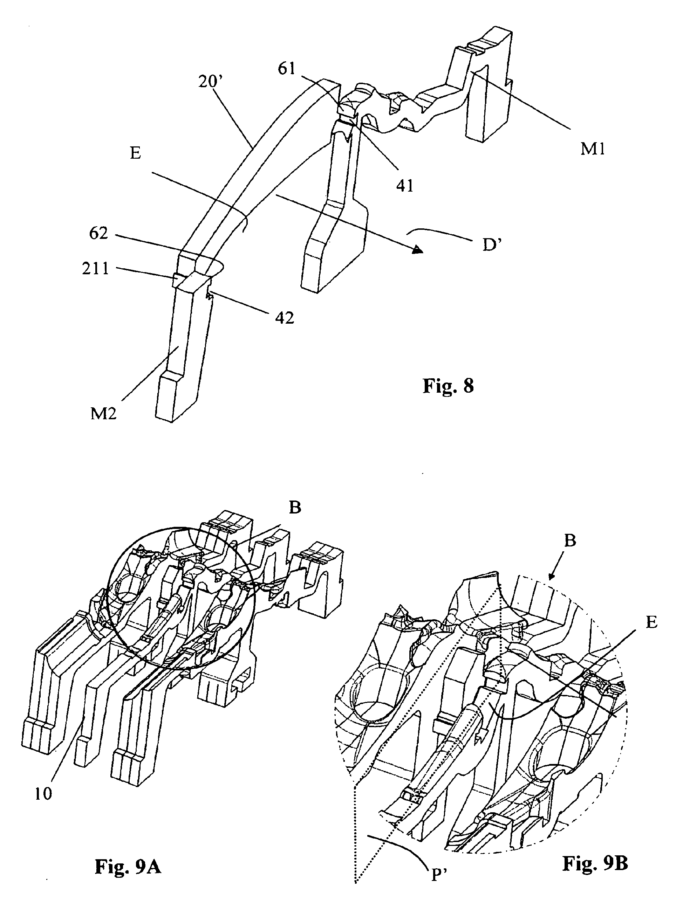

L'étape (52) de décomposition peut permettre de délimiter une portion secondaire (20) en séparant la portion principale en deux morceaux distincts (M1, M2). Comme illustré à la figure 8, la partie intérieure de l'insert (20') se substituant à la portion secondaire est alors entourée par les deux morceaux (M1, M2) de la portion principale. Naturellement l'insert (20') obtenu dans cette variante a une épaisseur égale à celle du reste de la strate, par exemple de l'ordre de 10 mm.

Une fois les modifications apportées dans la ou les strates sélectionnées, il s'ensuit une étape (57) d'empilement de strates incluant au moins une strate (1) sélectionnée munie d'un insert (2) pour former un second dispositif de moulage. On obtient donc, une fois l'ensemble remonté, une nouvelle empreinte compacte.

En référence aux figures 6, 9A et 9B, on comprend que la fabrication d'une strate selon l'invention prévoit par exemple la fabrication d'un logement aplati ou de tout autre forme (surface réglée) correspondant à l'emplacement (E) de réception. Ce logement a une forme complémentaire de la partie intérieure (21) de l'insert (2) et comprend un plan médian (P') qui est confondu avec le plan médian (P, Fig. 3B) de la portion principale (10) de la strate. La strate obtenue par l'assemblage de l'insert avec la portion principale conserve donc un plan médian (P) orthogonal à la direction (D) d'empilement. La partie intérieure (21) de l'insert (2) peut donc prendre appui sur l'emplacement (E) de réception et reste maintenue en position par l'intermédiaire des bords d'accrochage (211, 212, 213) ou éléments mâles similaires. Ces bords d'accrochage sont par exemple en forme de queues d'aronde (211, voir Fig.8, 212, 213) et coopèrent avec la forme complémentaire (41, 42, 43) sur la partie de tranche conservée de la strate. Ces bords joue également, grâce à leur forme spécifique, un rôle de renfort de la strate.

Un des avantages de l'invention est d'offrir une excellente adaptabilité à des évolutions localisées de la forme d'un moule, par utilisation d'un fichier de modifications et implantation de l'insert amovible conforme aux modifications à apporter. Cette adaptabilité permet de supprimer les interventions fortement onéreuses qui mettent en péril le développement des dispositifs de moulage conçus par strates.

Dans un mode de réalisation de l'invention, le procédé selon l'invention permet de générer un fichier numérique pouvant servir à commander une machine outil (ou organe d'usinage ou découpe analogue). Un premier ensemble de données numériques permet de commander la création par la machine outil de l'entaille correspondant à l'espacement (E) de réception. Un second ensemble de données numériques est utilisé pour commander la création par la machine outil d'une forme complémentaire à l'entaille lors de la fabrication de l'insert (2). Ce second ensemble de données numériques peut aussi servir à la formation de la forme saillante modifiée, côté moulant.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Procédé de modification localisée d'un dispositif stratifié (100) de moulage d'une matière, comprenant une étape (50) de fourniture d'une pluralité de strates conçues chacune d'après un modèle numérique de conception assistée par ordinateur (3) pour former par empilement des strates un premier dispositif de moulage, le procédé étant **caractérisé en ce qu'**il comprend :
- une étape (51) de sélection d'au moins une strate (1) à modifier à partir d'un fichier CAO à jour ;
- à partir d'un fichier contenant le modèle numérique de la strate (1) sélectionnée, une étape (52) de décomposition de la strate (1) sélectionnée en une portion principale (10) et une portion secondaire (20), la portion secondaire (20) comprenant une partie dite intérieure (21) entourée par la portion principale (10) et une partie dite extérieure (200) correspondant à une zone destinée au contact avec la matière à refroidir ;
- une étape (53) de simulation d'un insert de substitution (S) à la portion secondaire (20), ayant au moins une partie extérieure (22) modifiée par rapport à la partie extérieure (200) de la portion secondaire (20) ;
- une étape (54) de découpe utilisant au moins un organe de découpe pour enlever, dans la strate (1) sélectionnée, la portion secondaire (20) et former un emplacement (E) de réception d'un insert ;
- une étape (55) de fabrication d'un insert (2) conforme à l'insert (S) virtuel résultant de l'étape (53) de simulation, utilisant au moins un organe de découpe pour fabriquer l'insert (2) à partir d'une pièce générique de même épaisseur (e) que la strate (1) sélectionnée ; et
- une étape (56) d'implantation de l'insert (2) fabriqué dans l'emplacement (E) formé lors de l'étape (54) de découpe dans la strate (1) sélectionnée.

2. Procédé selon la revendication 1, dans lequel l'étape (54) de découpe dans la strate (1) sélectionnée et l'étape (55) de fabrication de l'insert (2) comprennent chacune une découpe par un fil métallique d'électroérosion ou un mode de découpe choisi parmi les techniques de fraisage, érosion par enfonçage, découpe jet d'eau, découpe laser.

3. Procédé selon la revendication 1 ou 2, dans lequel l'étape d'implantation (56) comprend uniquement une insertion et un serrage de l'insert (2) fabriqué entre au moins deux parois opposées (61, 62) de l'emplacement (E) de réception.

4. Procédé selon une des revendications 1 à 3, comprenant une étape (51') d'identification d'au moins une zone (A) de moulage à modifier qui s'étend sur une strate (1) ou sur plusieurs strates adjacentes, ladite étape (51') d'identification étant prise en compte pour sélectionner un nombre déterminé de strates adjacentes lors de l'étape (51) de sélection, l'étape (52) de décomposition de chacune des strates (1) sélectionnées utilisant des informations représentatives d'une localisation de la zone (A) de moulage à modifier pour générer, pour l'ensemble des strates (1) sélectionnées, un ensemble de portions secondaires (20) qui englobe ladite zone (A) à modifier.

5. Procédé selon une des revendications 1 à 4, dans lequel ladite étape (52) de décomposition comprend un calcul d'une délimitation entre la portion principale (10) et la portion secondaire (20) qui prévoit la création de bords d'ancrage (211, 212, 213) dans ladite partie intérieure (21) de la portion secondaire, complémentaires de logements d'ancrage (41, 42, 43) de l'emplacement (E) de réception.

6. Procédé selon une des revendications 1 à 5, comprenant une étape (57) d'empilement de strates incluant au moins une strate (1) sélectionnée munie d'un insert (2) pour former un second dispositif de moulage.

7. Procédé selon une des revendications 1 à 6, **caractérisé en ce que** l'étape (52) de décomposition comprend une délimitation d'une portion secondaire séparant la portion principale en deux morceaux distincts (M1, M2), la portion secondaire comprenant une partie intérieure entourée par les deux morceaux de la portion principale et une partie extérieure correspondant à une zone destinée au contact avec la matière à refroidir.

8. Strate pour dispositif (100) de moulage de type stratifié, **caractérisée en ce qu'**elle se compose d'au moins une pièce principale (10) et d'un insert (2) amovible prévu pour permettre de faire évoluer localement la forme du dispositif (100) de moulage, la pièce principale (10) étant d'épaisseur (e) déterminée et dotée d'un emplacement (E) de réception délimitant un logement aplati ayant un plan médian (P') confondu avec le plan médian (P) de la strate pour recevoir une partie dite intérieure (21) de l'insert (2), la partie intérieure (21) étant d'épaisseur égale à ladite épaisseur (e) déterminée et prolongée par une partie dite extérieure (22) incluant une zone destinée au contact avec une matière à refroidir.

9. Strate selon la revendication 8, dans laquelle l'emplacement (E) de réception a un profil général en U doté de logements d'ancrage (41, 42, 43) pour recevoir des éléments mâles (211, 212, 213) prévus dans la partie intérieure (21) de l'insert (2).

10. Strate selon les revendications 8 ou 9, dans laquelle l'insert (2) est destiné à faire évoluer localement la forme d'un dispositif stratifié (100) de moulage, **caractérisé en ce que** l'insert comporte :
- une partie dite intérieure (21) d'épaisseur (e) déterminée prévue pour prendre appui sur un emplacement (E) de réception situé dans une strate du dispositif (100) de moulage, ladite partie intérieure (21) comprenant des bords d'accrochage (211, 212, 213) pour se fixer de manière amovible dans ledit emplacement (E) ; et
- une partie dite extérieure (22) incluant une zone destinée au contact avec une matière à refroidir.

11. Strate selon la revendication 10, **caractérisée en ce que** l'insert (2) comporte au moins une forme en queue d'aronde (211, 212, 213) coopérant avec une forme complémentaire (41, 42, 43) réalisée dans la strate.

12. Dispositif (100) de moulage de type stratifié, formé par empilement d'une pluralité de strates aplaties selon un plan orthogonal à la direction (D) d'empilement, **caractérisé en ce qu'**il comporte au moins une strate selon la revendication 8 ou 9.

13. Utilisation d'une strate selon la revendication 8 ou 9 pour apporter une modification à un prototype réalisé par un procédé de conception par strates.

## Claims

1. Method of localised modification of a stratified device (100) for moulding of a material, comprising a step (50) of supplying a plurality of strata each designed according to a computer-assisted design (3) digital model in order to form a first moulding device by stacking of the strata, the method being **characterised in that** it comprises:
- a step (51) of selection of at least one stratum (1) to be modified on the basis of an up to date CAD file;
- on the basis of a file containing the digital model of the selected stratum (1), a step (52) of breakdown of the selected stratum into a main portion (10) and a secondary portion (20), the secondary portion (20) comprising a part referred to as the inner part (21) surrounded by the main part (10) and a part referred to as the outer part (200) corresponding to a zone intended for the contact with the material to be cooled;
- a step (53) of simulation of an insert for substitution (S) for the secondary portion (20) having at least one outer part (22) modified with respect to the outer part (200) of the secondary portion (20);
- a step (54) of cutting out using at least one cutting member in order to remove the secondary portion in the selected stratum (1) and to form a location (E) for receiving an insert;
- a step (55) of manufacture of an insert (2) in conformity with the virtual insert (S) resulting from the step (53) of simulation, using at least one cutting member in order to manufacture the insert (2) from a generic part of the same thickness (2) as the selected stratum (1); and
- a step (56) of implanting the manufacture insert (2) into the location (E) formed during the step (54) of cutting out in the selected stratum (1).

2. Method as claimed in Claim 1, wherein the step (54) of cutting out in the selected stratum (1) and the step (55) of manufacture of the insert (2) each comprise cutting by a metal wire for electrodischarge machining or a cutting method chosen from amongst the techniques of milling, die sinking electrodischarge machining, water jet cutting, laser cutting.

3. Method as claimed in either Claim 1 or Claim 2, wherein the step of implantation (56) comprises solely insertion and locking of the manufactured insert (2) between at least two opposing walls (61, 62) of the receiving location (E).

4. Method as claimed in any one of Claims 1 to 3, comprising a step (51') of identification of at least one moulding zone (A) to be modified which extends over a stratum (1) or over s plurality of adjacent strata, the said step (5') of identification being taken into account in order to select a specific number of adjacent strata during the step (51) of selection, the step (52) of breakdown of each of the selected strata (1) using data representing a location of the moulding zone (A) to be modified in order to generate for all of the selected strata (1) a set of secondary portions (20) which encompasses the said zone (A) to be modified.

5. Method as claimed in any one of Claims 1 to 4, wherein the said step (52) of breakdown comprises a calculation of a demarcation between the main portion (10) and the secondary portion (20) which provides for the creation of anchoring edges (211, 212, 213) in the said inner part (21) of the secondary portion which are complementary to anchoring recesses (41, 42, 43) of the receiving location (E).

6. Method as claimed in any one of Claims 1 to 5, comprising a step (57) of stacking strata including at least one selected stratum (1) provided with an insert (2) in order to form a second moulding device.

7. Method as claimed in any one of Claims 1 to 6, **characterised in that** the step (52) of breakdown comprises a demarcation of a secondary portion separating the main portion into two distinct pieces (M1, M2), the secondary portion comprising a lower part surrounded by the two pieces of the main portion and an outer part corresponding to a zone intended for contact with the material to be cooled.

8. Stratum for moulding device (100) of the stratified type, **characterised in that** it is composed of at least one main part (10) and a removable insert (2) provided in order to enable the localised development of the shape of the moulding device (100), the main part (10) having a defined thickness (e) and being provided with a receiving location (E) delimiting a flattened recess having a median plane (P') merged with the median plane (P) of the stratum in order to receive a so-called inner part (21) of the insert (2), the inner part (21) having a thickness equal to the said defined thickness (e) and being extended by a so-called outer part (22) including a zone intended for contact with a material to be cooled.

9. Stratum as claimed in Claim 8, wherein the receiving location (E) has a generally U-shaped profile provided with anchoring recesses (41, 42, 43) in order to receive male elements (211, 212, 213) provided in the inner part (21) of the insert (2).

10. Stratum as claimed in either Claim 8 or Claim 9, wherein the insert (2) is intended to cause localised development of the shape of a stratified moulding device (100), **characterised in that** the insert includes:
- a so-called inner part (21) of defined thickness (e) provided in order to be supported on a receiving location (E) situated in a stratum of the moulding device (100), the said inner part (21) comprising anchoring edges (211, 22, 213) in order to be fixed removably in the said location (E); and
- a so-called outer part (22) including a zone intended for contact with a material to be cooled.

11. Stratum as claimed in Claim 10, **characterised in that** the insert (2) includes at least one dovetail shape (211, 212, 213) co-operating with a complementary shape (41, 42, 43) produced in the stratum.

12. Moulding device (100) of the stratified type, formed by stacking of a plurality of strata flattened in a plane orthogonal to the stacking direction (D), **characterised in that** it includes at least one stratum as claimed in either Claim 8 or Claim 9.

13. Use of a stratum as claimed in either Claim 8 or Claim 9 in order to make a modification to a prototype produced by a method of design by strata.

## Patentansprüche

1. Verfahren für die lokalisierte Modifikation einer Schicht-Vorrichtung (100) zum Formen eines Materials, aufweisend einen Schritt (50) des Bereitstellens einer Mehrzahl von jeweils gemäß einem digitalen rechnergestützten Entwurfsmodell (3) entworfenen Schichten zum Ausbilden einer ersten Formgebungs-Vorrichtung durch Aufeinanderschichten der Schichten, wobei das Verfahren **dadurch gekennzeichnet ist, dass** es aufweist:
- einen Schritt (51) des Auswählens mindestens einer zu modifizierenden Schicht (1) ausgehend von einer aktuellen CAD-Datei,
- ausgehend von einer Datei, die das digitale Modell der ausgewählten Schicht (1) enthält, einen Schritt (52) des Zerlegens der ausgewählten Schicht (1) in einen Hauptabschnitt (10) und einen Nebenabschnitt (20), wobei der Nebenabschnitt (20) einen von dem Hauptabschnitt (10) umgebenen sogenannten inneren Teil (21) und einen sogenannten äußeren Teil (200) aufweist, der einem Bereich entspricht, der für den Kontakt mit dem zu kühlenden Material bestimmt ist,
- einen schritt (53) des Simulierens eines Ersatz-Einsatzstücks (S) für den Nebenabschnitt (20) mit mindestens einem äußeren Teil (22), der relativ zu dem äußeren Teil (200) des Nebenabschnitts (20) modifiziert ist,
- einen Schritt (54) des Ausschneidens mittels mindestens eines Schneidemittels zum Entfernen des Nebenabschnitts (20) in der ausgewählten Schicht (1) und zum Bilden einer Stelle (E) für das Aufnehmen eines Einsatzstücks,
- einen Schritt (55) des Herstellens eines Einsatzstücks (2), das dem virtuellen Einsatzstück (S) entspricht, das sich aus dem Simulationsschritt (53) ergibt, mittels mindestens eines Schneidemittels zum Herstellen des Einsatzstücks (2) ausgehend von einem Gattungsstück mit derselben Dicke (e) wie die ausgewählte Schicht (1), und
- einen Schritt (56) des Einsetzens des hergestellten Einsatzstücks (2) in die während des Schrittes (54) des Ausschneidens gebildete Stelle (E) in der ausgewählten Schicht (1).

2. Verfahren gemäß Anspruch 1, wobei der Schritt (54) des Schneidens in der ausgewählten Schicht (1) und der Schritt (55) des Herstellens (55) des Einsatzstücks (2) jeweils ein Ausschneiden mittels eines Elektroerosions-Drahtes oder mittels einer Art des Schneidens aufweisen, die ausgewählt ist aus den Techniken des Fräsens, des Senkerodierens, des Wasserstrahl-Schneidens und des Laser-Schneidens.

3. Verfahren gemäß Anspruch 1 oder 2, wobei der Schritt des Einsetzens (56) ausschließlich ein Einsetzen und ein Festklemmen des hergestellten Einsatzstücks (2) zwischen mindestens zwei gegenüberliegenden Wänden (61, 62) der Aufnahmestelle (E) aufweist.

4. Verfahren gemäß einem der Ansprüche 1 bis 3, das einen Schritt (51') des Identifizierens mindestens eines zu modifizierenden Formgebungs-Bereich (A) aufweist, der sich über eine Schicht (1) oder über mehrere benachbarte schichten erstreckt, wobei der Schritt (51') des Identifizierens dem Auswählen einer bestimmten Anzahl von benachbarten Schichten während des Auswählschrittes (51) Rechnung trägt, wobei der Schritt (52) des Zerlegens jeder der ausgewählten Schichten Informationen verwendet, die für eine Lokalisierung des zu modifizierenden Formgebungs-Bereichs (A) zum Bilden einer den zu modifizierenden Bereich (A) einschließenden Menge von Nebenabschnitten (20) für die Menge der ausgewählten Schichten (1) repräsentativ sind.

5. Verfahren gemäß einem der Ansprüche 1 bis 4, wobei der Schritt (52) des Zerlegens eine Berechnung einer Begrenzung zwischen dem Hauptabschnitt (10) und dem Nebenabschnitt (20) aufweist, die das Bilden von Verankerungskanten (211, 212, 213) in dem sogenannten inneren Teil (21) des Nebenabschnitts vorsieht, die zu Verankerungs-Aufnahmen (41, 42, 43) der Aufnahmestelle (E) komplementär sind.

6. Verfahren gemäß einem der Ansprüche 1 bis 5, das einen Schritt (57) des Aufeinanderstapelns von Schichten einschließlich mindestens einer ausgewählten Schicht (1), die mit einem Einsatzstück (2) versehen ist, zum Bilden einer zweiten Formgebungs-Vorrichtung aufweist.

7. Verfahren gemäß einem der Ansprüche 1 bis 6, **dadurch gekennzeichnet, dass** der Schritt (52) des Zerlegens eine Begrenzung eines Nebenabschnitts aufweist, die den Hauptabschnitt in zwei unterschiedliche Stücke (M1, M2) teilt, wobei der Nebenabschnitt aufweist: einen inneren Teil, der von den beiden Stücken des Hauptabschnitts umgeben ist, und einen äußeren Teil, der einem Bereich entspricht, der für den Kontakt mit dem zu kühlenden Material bestimmt ist.

8. Schicht für eine Formgebungs-Vorrichtung (100) des Schicht-Typs, **dadurch gekennzeichnet, dass** sie aus mindestens einem Hauptstück (10) und einem herausnehmbaren Einsatzstück (2) zusammengesetzt ist, das vorgesehen ist zum Bewirken des lokalen Entwickelns der Form der Formgebungs-Vorrichtung (100), wobei das Hauptstück (10) eine bestimmte Dicke (e) aufweist und mit einer Aufnahmestelle (E) versehen ist, die eine abgeflachte Aufnahme mit einer Mittelebene (P') begrenzt, die mit der Mittelebene (P) der Schicht vereinigt ist, zum Aufnehmen eines sogenannten inneren Teils (21) des Einsatzstücks (2), wobei der innere Teil (21) eine Dicke aufweist, die gleich der bestimmten Dicke (e) ist und durch einen sogenannten äußeren Teil (22) verlängert ist, der einen Bereich einschließt, der für den Kontakt mit einem zu kühlenden Material bestimmt ist.

9. Schicht gemäß Anspruch 8, wobei die Aufnahmestelle (E) ein im wesentlichen U-förmiges Profil aufweist, das mit Verankerungsaufnahmen (41, 42, 43) zum Aufnehmen von Steck-Elementen (211, 212, 213) versehen ist, die in dem inneren Teil (21) des Einsatzstücks (2) vorgesehen sind.

10. Schicht gemäß den Ansprüche 8 oder 9, wobei das Einsatzstück (2) zum Bewirken des lokalen Entwickeln der Form einer Schicht-Formgebungs-Vorrichtung (100) vorgesehen ist, **dadurch gekennzeichnet, dass** das Einsatzstück aufweist:
- einen sogenannten inneren Teil (21) mit einer bestimmten Dicke (e), der Aufliegen auf einer Aufnahmestelle (E), die in einer Schicht der Formgebungs-Vorrichtung (100) positioniert ist, vorgesehen ist, wobei der innere Teil (21) Einhak-Ränder (211, 212, 213) zum herausnehmbaren Fixieren in der Stelle (E) aufweist, und
- einen sogenannten äußeren Teil (22), der einen Bereich einschließt, der für den Kontakt mit einem zu kühlenden Material bestimmt ist.

11. Schicht gemäß Anspruch 10, **dadurch gekennzeichnet, dass** das Einsatzstück (2) mindestens eine Schwalbenschwanz-Form (211, 212, 213) aufweist, die mit einer komplementären Form (41, 42, 43) zusammenwirkt, die in der Schicht realisiert ist.

12. Formgebungs-Vorrichtung (100) des Schichttyps, die mittels des Aufeinanderstapelns einer Mehrzahl von Schichten, die entlang einer Ebene orthogonal zu der Stapelrichtung (D) abgeflacht sind, ausgebildet ist, **dadurch gekennzeichnet, dass** sie mindestens eine Schicht gemäß dem Anspruch 8 oder 9 aufweist.

13. Verwendung einer Schicht gemäß Anspruch 8 oder 9 zum Modifizieren eines Prototyps, der mittels eines Schicht-Gestaltungs-Verfahrens realisiert ist.
